# EUROPÄISCHE PATENTSCHRIFT

(11) **EP 3 802 272 B1**
(45) Veröffentlichungstag und Bekanntmachung des Hinweises auf die Patenterteilung: **16.07.2025**
(21) Anmeldenummer: 18732674.9
(22) Anmeldetag: 01.06.2018
(51) Int. Cl.: B62B 1/12, B62B 1/14, B62B 1/26, B62B 5/06, A47B 3/08

(54) **BEFÖRDERUNGSVORRICHTUNG UND BEFÖRDERUNGSFAHRZEUG**
TRANSPORT DEVICE AND TRANSPORT VEHICLE
VÉHICULE DE TRANSPORT ET DISPOSITIF DE TRANSPORT

(43) Veröffentlichungstag der Anmeldung: 14.04.2021
(73) Patentinhaber: TANOS GmbH Verpacken Ordnen Präsentieren, 89257 Illertissen (DE)
(72) Erfinder: WOLLE, Lutz, 89233 Burlafingen (DE); GERBRANDA, Tjeerd Jan Pieter, 89340 Leipheim (NL); TRAAS, Tim, 4451 TV Heinkenszand (NL)
(74) Vertreter: Patentanwälte Magenbauer & Kollegen Partnerschaft mbB
(86) Internationale Anmeldenummer: PCT/EP2018/064482
(87) Internationale Veröffentlichungsnummer: WO 2019/228645

(56) Entgegenhaltungen:
- AU-A4- 2010 101 263
- DE-U1- 202007 002 551
- US-A1- 2014 110 447
- US-B1- 6 386 557
- US-B1- 6 543 796
- US-B1- 7 367 571

## Beschreibung

Die Erfindung betrifft eine Beförderungsvorrichtung mit einem Beförderungsfahrzeug. Das Beförderungsfahrzeug umfasst:
- einen unteren Abschnitt, der eine Stellfläche aufweist, auf der ein kastenförmiger Behälter abstellbar ist, und eine Behälter-Befestigungsschnittstelle, mit der der wenigstens eine kastenförmige Behälter an dem unteren Abschnitt befestigbar ist,
- zwei in einem rückwärtigen Bereich des Beförderungsfahrzeugs am unteren Abschnitt angeordnete Räder, mit denen das Beförderungsfahrzeug gegenüber einem Boden abgestützt und bewegt werden kann, und
- einen von dem unteren Abschnitt sich vertikal nach oben erstreckenden Gestellabschnitt, der in dem rückwärtigen Bereich angeordnet ist und an dem ein Griff vorhanden ist, mit dem sich das Beförderungsfahrzeug manuell in Kippstellung versetzten und relativ zum Boden bewegen lässt.

Ein solches Beförderungsfahrzeug ist aus dem Stand der Technik bekannt, wie beispielsweise aus der US 6,386,557 B1. So ist als Beförderungsfahrzeug zur Beförderung von kastenförmigen Behältern beispielsweise das von der Firma TANOS GmbH erhältliche Produkt "Sys-Roll" bekannt.

Das eingangs genannte Beförderungsfahrzeug wird typischerweise dazu eingesetzt, ein oder mehrere kastenförmige Behälter zu einem Einsatzort, beispielsweise einer Baustelle, zu transportieren. In dem kastenförmigen Behälter wird in der Regel Werkzeug, beispielsweise ein Elektrowerkzeug, und/oder Werkzeugzubehör aufbewahrt. Die kastenförmigen Behälter sind insbesondere derart ausgestaltet, dass sie aufeinander gestapelt und vertikal zugfest aneinander gekoppelt werden können, um einen stabilen vertikalen, insbesondere quaderförmigen, Stapel zu bilden. Zu diesem Zweck verfügen die kastenförmigen Behälter jeweils über den gleichen horizontalen Grundriss sowie über Kopplungsmittel, mit denen sie aneinander gekoppelt werden können. Der Stapel kann mit dem untersten kastenförmigen Behälter auf der Stellfläche des Beförderungsfahrzeugs platziert und mittels der Behälter-Befestigungsschnittstelle befestigt werden. Zweckmäßigerweise ist der Stapel nur mit dem untersten kastenförmigen Behälter am Beförderungsfahrzeug befestigt.

Das Beförderungsfahrzeug kann manuell in eine Kippstellung versetzt werden, bei der das Beförderungsfahrzeug um eine durch die Räder definierte Kippachse gegenüber dem Boden verkippt ist. In diesem Zustand kann das Beförderungsfahrzeug in der Art einer Sackkarre bewegt, insbesondere geschoben oder gezogen werden. Das Beförderungsfahrzeug kann auch als "sacckarrenartig" bzw. als Sackkarre bezeichnet werden.

Eine Kombination aus dem Beförderungsfahrzeug und dem damit zu befördernden Beförderungsgut, beispielsweise dem genannten kastenförmigen Behälter, soll als die Beförderungsvorrichtung bezeichnet werden.

Die US 6,386,557 B1 beschreibt einen portablen Kühler-Caddy mit einem Becherhalterpanel.

Die US 2014/0110447 A1 beschreibt eine klappbare, abnehmbare Ablage für zweirädrige Handwagen.

Die US 6,543,796 B1 beschreibt einen kombinierten Tisch und Gepäckträger zum Transportieren von Gepäck und zum Dienen als Arbeitstisch.

Die DE 20 2007 002 551 U1 beschreibt einen Wäschewagen mit einem Schrank, der an der Oberseite von einem Einlegeboden begrenzt ist.

Eine Aufgabe der Erfindung besteht darin, den Transport von am Einsatzort benötigten Vorrichtungen zu erleichtern.

Die Aufgabe wird gelöst durch eine Beförderungsvorrichtung gemäß Anspruch 1. Die Beförderungsvorrichtung umfasst einen länglichen Arbeitstisch sowie eine am Beförderungsfahrzeug vorhandene Arbeitstisch-Befestigungsschnittstelle, mit der der längliche Arbeitstisch in einer vertikalen Ausrichtung an dem Beförderungsfahrzeug befestigbar ist, um eine Transportstellung einzunehmen, in der der längliche Arbeitstisch durch das Beförderungsfahrzeug befördert werden kann.

Somit kann mit dem Beförderungsfahrzeug zusätzlich zu dem kastenförmigen Behälter auch noch ein länglicher Arbeitstisch transportiert werden. Der kastenförmige Behälter und der Arbeitstisch können folglich als eine einheitlich handhabbare Einheit - die Beförderungsvorrichtung - transportiert werden.

Insgesamt ergibt sich somit eine kompakte und einfach zu handhabende Beförderungsvorrichtung, mit der mehrere am Einsatzort benötigte Vorrichtungen - nämlich einer oder mehrere kastenförmige Behälter sowie der Arbeitstisch - transportiert werden können.

Zweckmäßigerweise ist der längliche Arbeitstisch mit der Arbeitstisch-Befestigungsschnittstelle in einer vertikalen Ausrichtung in dem rückwärtigen Bereich an dem Beförderungsfahrzeug befestigbar.

Dadurch, dass sich der Arbeitstisch im rückwärtigen Bereich des Beförderungsfahrzeugs - also in dem Bereich, in dem die Räder angeordnet sind - befestigen lässt, befindet sich der Arbeitstisch im angebrachten Zustand im Bereich der Kippachse des Beförderungsfahrzeugs, so dass das zum Kippen des Beförderungsfahrzeugs benötigte Drehmoment auch bei angebrachtem Arbeitstisch gering gehalten werden kann.

Der Arbeitstisch ist von dem Beförderungsfahrzeug werkzeuglos vollständig abnehmbar. Der Arbeitstisch ist zweckmäßigerweise werkzeuglos an dem Beförderungsfahrzeug anbringbar. Der kastenförmige Behälter ist zweckmäßigerweise werkzeuglos von dem Beförderungsfahrzeug abnehmbar (insbesondere vollständig) und/oder an diesem anbringbar.

Der Arbeitstisch verfügt über eine ausklappbare Tischbeinanordnung.

Im angebrachten Zustand ist der längliche Arbeitstisch insbesondere mit seiner Längsachse vertikal ausgerichtet.

Die Arbeitstisch-Befestigungsschnittstelle umfasst eine am unteren Abschnitt angeordnete erste Befestigungseinrichtung , wobei die erste Befestigungseinrichtung eine Befestigungsstruktur umfasst, die mit einem am Arbeitstisch angeordneten Befestigungselement in Eingriff gebracht werden kann, und wobei das Beförderungsfahrzeug über einen Abstützabschnitt verfügt, an dem der Arbeitstisch mit dem Befestigungselement in einer horizontalen Ausrichtung angebracht werden kann, um eine stationäre Arbeitsstellung einzunehmen.

Vorteilhafte Weiterbildungen sind Gegenstand der Unteransprüche.

Exemplarische Details und Ausführungsformen werden nachstehend unter Bezugnahme auf die Figuren erläutert. Dabei zeigt:
- Figur 1: eine perspektivische Ansicht einer Beförderungsvorrichtung mit einem Beförderungsfahrzeug, einem Stapel aus kastenförmigen Behältern und einem Arbeitstisch,
- Figur 2: eine perspektivische Ansicht des Beförderungsfahrzeugs,
- Figur 3: eine perspektivische Ansicht der Beförderungsvorrichtung in einer Arbeitskonfiguration,
- Figur 4: eine weitere perspektivische Ansicht der Beförderungsvorrichtung in der Arbeitskonfiguration,
- Figur 5: eine schematische Seitenansicht der Beförderungsvorrichtung,
- Figur 6: eine weitere schematische Seitenansicht der Beförderungsvorrichtung,
- Figur 7: eine weitere schematische Seitenansicht der Beförderungsvorrichtung,
- Figur 8: eine perspektivische Rückansicht der Beförderungsvorrichtung,
- Figur 9: eine Detailansicht einer ersten Befestigungseinrichtung des Beförderungsfahrzeugs,
- Figur 10: eine perspektivische Ansicht der Beförderungsvorrichtung von oben,
- Figur 11: eine weitere Detailansicht der ersten Befestigungseinrichtung des Beförderungsfahrzeugs,
- Figur 12: eine weitere perspektivische Rückansicht der Beförderungsvorrichtung,
- Figur 13: eine Detailansicht einer zweiten Befestigungseinrichtung des Beförderungsfahrzeugs,
- Figur 14: eine Schnittansicht der ersten Befestigungseinrichtung,
- Figur 15: eine Seitenansicht des Beförderungsfahrzeugs, wobei sich ein Griff in einer ersten Schwenkstellung befindet,
- Figur 16: eine Seitenansicht des Beförderungsfahrzeugs, wobei sich der Griff in einer zweiten Schwenkstellung befindet,
- Figur 17: eine Seitenansicht des Beförderungsfahrzeugs, wobei sich der Griff in einer dritten Schwenkstellung befindet,
- Figur 18: eine Rückansicht des Beförderungsfahrzeugs,
- Figur 19: eine Detailansicht eines Positioniermechanismus,
- Figur 20: eine Ansicht von Komponenten des Positioniermechanismus,
- Fig. 21: eine perspektivische Ansicht eines Behälters,
- Fig. 22: einen vertikalen Schnitt durch die Unterseite eines am Beförderungsfahrzeug befestigten Behälters,
- Fig. 23: ein auf einer Stellfläche des Beförderungsfahrzeugs abgestellter Behälter.

Bei den nachfolgenden Erläuterungen wird auf die in den Figuren eingezeichnete x-Richtung, y-Richtung und z-Richtung Bezug genommen. Die x-Richtung, y-Richtung und z-Richtung sind orthogonal zueinander ausgerichtet. Die x-Richtung kann auch als Querrichtung, die y-Richtung auch als Längsrichtung und die z-Richtung auch als Vertikalrichtung bezeichnet werden. Ferner können die x-Richtung und die y-Richtung auch als horizontale Richtungen bezeichnet werden. Das Bezugssystem für die Richtungen ist die Beförderungsvorrichtung 1 in einer aufrechten Stellung.

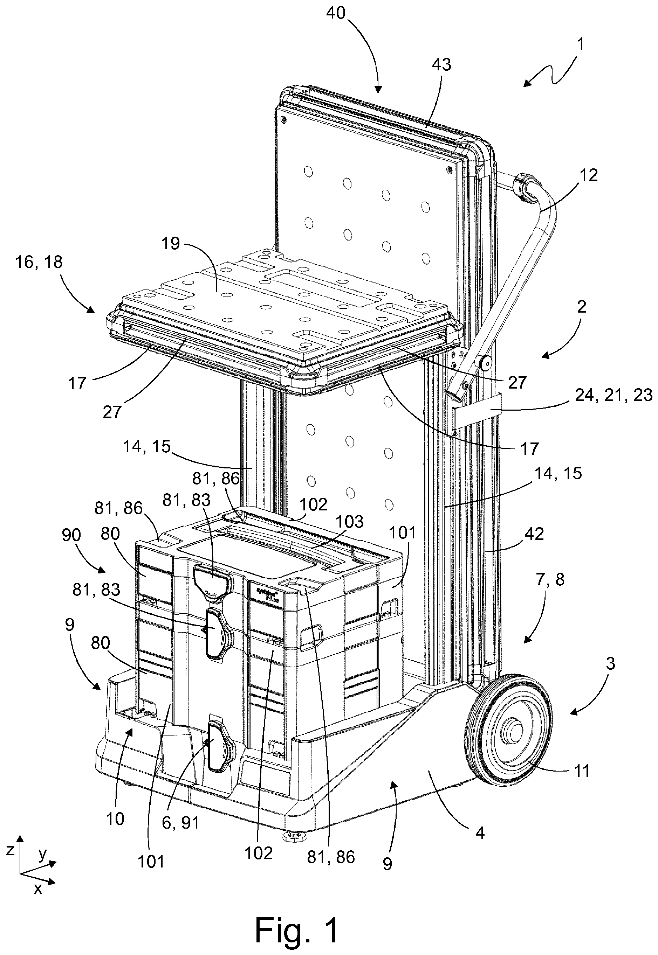

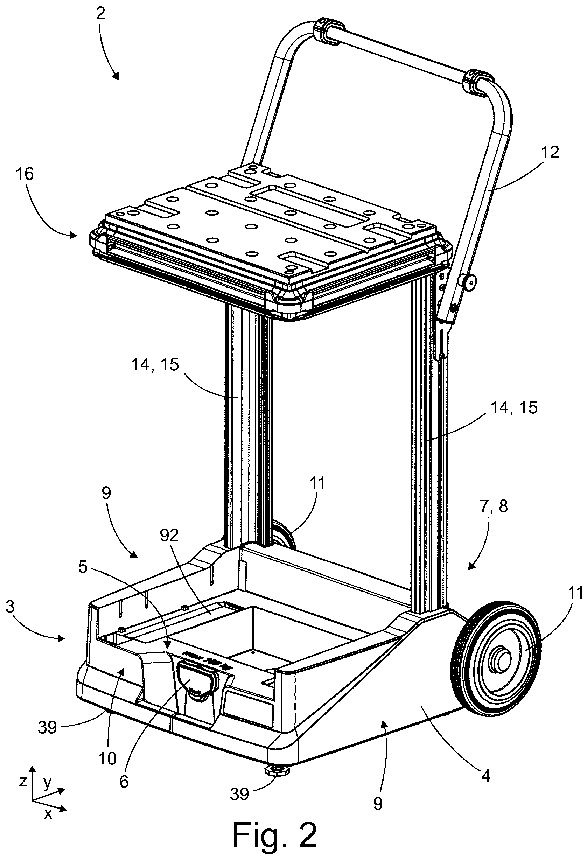

Die Figur 1 zeigt eine Beförderungsvorrichtung 1 mit einem Beförderungsfahrzeug 2. Das Beförderungsfahrzeug 2 umfasst einen unteren Abschnitt 3. Der untere Abschnitt 3 verfügt über eine Stellfläche 5, auf der exemplarisch ein kastenförmiger Behälter 80 abgestellt ist. Die Stellfläche 5 ist z.B. in der Figur 2 zu sehen. Exemplarisch ist in der Figur 1 ein vertikaler Stapel 90, der zwei aufeinander gestapelte und aneinander gekoppelte kastenförmige Behälter 80 umfasst, auf der Stellfläche 5 abgestellt.

Der untere Abschnitt 3 verfügt ferner über eine Behälter-Befestigungsschnittstelle 6, mit der exemplarisch der kastenförmige Behälter 80 bzw. der vertikale Stapel 90 an dem unteren Abschnitt 3 befestigt ist.

Das Beförderungsfahrzeug 2 umfasst ferner zwei in einem rückwärtigen Bereich 7 des Beförderungsfahrzeugs 2 am unteren Abschnitt 3 angeordnete Räder 11, mit denen das Beförderungsfahrzeug 2 insbesondere in einer Kippstellung gegenüber einem Boden 30 abgestützt und bewegt werden kann. Mit dem Begriff "rückwärtiger Bereich" ist insbesondere derjenige y-Bereich des Beförderungsfahrzeugs 2 gemeint, der sich in der Nähe der querseitigen Rückseite 8 des Beförderungsfahrzeugs 2 befindet.

Das Beförderungsfahrzeug 2 umfasst ferner einen sich von dem unteren Abschnitt 3 vertikal nach oben erstreckenden Gestellabschnitt 14, der in dem rückwärtigen Bereich 7 angeordnet ist. An dem Gestellabschnitt 14 ist ein Griff 12 vorhanden, mit dem sich das Beförderungsfahrzeug 2 manuell in eine Kippstellung versetzten und relativ zum Boden 30 bewegen lässt.

Die Beförderungsvorrichtung 1 umfasst ferner einen länglichen Arbeitstisch 40 sowie eine am Beförderungsfahrzeug 2 vorhandene Arbeitstisch-Befestigungsschnittstelle 24, mit der der längliche Arbeitstisch 40 in einer vertikalen Ausrichtung an dem Beförderungsfahrzeug 2 befestigt ist, um eine Transportstellung einzunehmen, in der der längliche Arbeitstisch 40 durch das Beförderungsfahrzeug 2 befördert werden kann.

Nachstehend werden weitere exemplarische Details erläutert.

Zunächst zum Grundaufbau des Beförderungsfahrzeugs 2:
Die Figur 2 zeigt das Beförderungsfahrzeug 2 für sich genommen - also ohne kastenförmigen Behälter und ohne Arbeitstisch. Das Beförderungsfahrzeug 2 kann auch so - also für sich genommen - bereitgestellt sein.

Das Beförderungsfahrzeug 2 hat (ohne den Griff 12) in einer y-z-Seitenansicht im Wesentlichen die Form eines um 90 Grad gedrehten U bzw. die Form eines C. Der untere Abschnitt 3 und ein nachstehend noch erläuterter oberer Abschnitt 16 stellen in einer y-z-Seitenansicht jeweils horizontale Schenkel dar, die durch den vertikalen Gestellabschnitt 14, zweckmäßigerweise nur durch den vertikalen Gestellabschnitt 14, verbunden sind.

Der untere Abschnitt 3 und der vertikale Gestellabschnitt 14 bilden zusammen (ohne den Griff 12) in einer y-z-Seitenansicht eine im Wesentlichen L-förmige Struktur.

Die Erstreckung des vertikalen Gestellabschnitts 14 in z-Richtung ist größer als die Erstreckung des unteren Abschnitts 3 in y-Richtung und größer als die Erstreckung des oberen Abschnitts 16 in y-Richtung. Die y-Erstreckung des unteren Abschnitts 3 entspricht der y-Erstreckung des oberen Abschnitts 16. Der vertikale Gestellabschnitt 14 nimmt vorzugsweise wenigstens 60%, insbesondere wenigstens 70% der z-Erstreckung des Beförderungsfahrzeugs 2 ohne den Griff 12 ein.

Das Beförderungsfahrzeug 2 weist eine querseitige Vorderseite 10, zwei Längsseiten 9 und eine querseitige Rückseite 8 auf. Der untere Abschnitt 3 wird exemplarisch von einem Unterteil 4 gebildet, das eine im Wesentlichen quaderförmige, insbesondere flache Grundgestalt aufweist. Die y- und x-Erstreckung des Unterteils 4 sind jeweils wenigstens doppelt so groß wie die z-Erstreckung des Unterteils 4. An den Längsseiten 9 ist jeweils ein Rad 11 angeordnet, und zwar im rückwärtigen Bereich 7 des Beförderungsfahrzeugs 2, also in der Nähe der Rückseite 8. Die beiden Räder 11 verfügen über koaxial angeordnete, in x-Richtung ausgerichtete Drehachsen.

Das Unterteil 4 verfügt an seiner Unterseite über einen, zwei oder mehr Standfüße 39, mit denen das Beförderungsfahrzeug 2 in Standstellung stabil auf einem ebenen Boden steht. Exemplarisch steht das Beförderungsfahrzeug 2 in der Standstellung nur auf den Standfüßen 39, und insbesondere nicht auf den Rädern 11.

Das Beförderungsfahrzeug 2 kann eine Standstellung einnehmen, in der es stabil auf dem Boden steht. In der Standstellung ist der untere Abschnitt 3 parallel zum Boden 30 ausgerichtet und der vertikale Gestellabschnitt 14 ist senkrecht zum Boden 30 ausgerichtet. Das Beförderungsfahrzeug 2 kann ferner eine Fahrstellung einnehmen, in der es relativ zum Boden verkippt ist, beispielsweise um ca. 45 Grad. Das Beförderungsfahrzeug 2 lässt sich um die Drehachse der Räder 11 gegenüber dem Boden 30 verkippen. In der Fahrstellung stützen die beiden Räder 11 das Beförderungsfahrzeug 2 gegenüber dem Boden 30, auf dem das Beförderungsfahrzeug 2 steht, ab. In der Fahrstellung lässt sich das Beförderungsfahrzeug 2 durch manuelles Schieben oder Ziehen in Bewegung versetzen. Das Beförderungsfahrzeug 2 lässt sich folglich wie eine Sackkarre handhaben und kann auch als sackkarrenartig bezeichnet werden.

Wie bereits erwähnt, ist in der Figur 1 die Beförderungsvorrichtung 1 gezeigt, d.h., das Beförderungsfahrzeug 2 mit angebrachtem Arbeitstisch 40 und kastenförmigen Behältern 80.

Die Beförderungsvorrichtung 1 befindet sich hier in einer Transportkonfiguration, in der die kastenförmigen Behälter 80 und der Arbeitstisch 40 fest an dem Beförderungsfahrzeug 2 angebracht sind, so dass die kastenförmigen Behälter 80 und der Arbeitstisch 40 auch in einer Fahrstellung, in der die Beförderungsvorrichtung 1 gegenüber dem Boden 30 verkippt ist, stabil am Beförderungsfahrzeug 2 befestigt sind und sich durch das Beförderungsfahrzeug 2 befördern lassen. Zweckmäßigerweise ist der Arbeitstisch 40 in der Transportkonfiguration werkzeuglos von dem Beförderungsfahrzeug 2 abnehmbar.

Der Arbeitstisch 40 befindet sich in der Figur 1 in der Transportstellung, in der der Arbeitstisch 40 mit seiner Längsachse vertikal - also in z-Richtung - ausgerichtet ist. Die Tischebene des Arbeitstischs 40 ist in der Transportstellung parallel zu einer x-z-Ebene ausgerichtet. Die x-Erstreckung des Arbeitstischs 40 entspricht der x-Erstreckung des vertikalen Gestellabschnitts 14. In der Transportstellung liegt der Arbeitstisch 40 an dem vertikalen Gestellabschnitt 40 an und nimmt zweckmäßigerweise denselben x-Bereich wie der vertikale Gestellabschnitt 40 ein. In z-Richtung erstreckt sich der Arbeitstisch 40 in der Transportstellung von dem unteren Abschnitt 3 nach oben und überragt vorzugsweise das Beförderungsfahrzeug 2, insbesondere den oberen Abschnitt 16 und/oder den Griff 12.

Der Arbeitstisch 40 ist in der Transportstellung in rückwärtiger Richtung - also in y-Richtung hin zu der Rückseite 8 - hinter dem vertikalen Gestellabschnitt 14 angeordnet. In y-Richtung befindet sich der Arbeitstisch 40 in der Transportstellung auf der der Rückseite 8 zugewandten Seite des vertikalen Gestellabschnitts 14. Die Stellfläche 5 befindet sich exemplarisch auf der anderen Seite - also auf der der Vorderseite 10 zugewandten Seite des vertikalen Gestellabschnitts 14.

Der vertikale Gestellabschnitt 14 spannt eine x-z-Ebene auf. Exemplarisch verfügt der vertikale Gestellabschnitt 14 über zwei parallel zueinander verlaufende, säulenförmige Gestellelemente 15, die exemplarisch als Profile ausgebildet sind. Vorzugsweise besteht der vertikale Gestellabschnitt 14 aus den beiden Gestellelementen 15.

Die beiden Gestellelemente 15 nehmen jeweils denselben y- und z-Bereich ein und sind in x-Richtung zueinander versetzt. Die Gestellelemente 15 sind in y-Richtung jeweils in der Nähe der Rückseite 8, also im rückwärtigen Bereich 7, angeordnet und befinden sich in x-Richtung im Bereich der Längsseiten 9. Die beiden Gestellelemente 15 sind an der Oberseite des Unterteils 4 befestigt und erstrecken sich vertikal nach oben.

An den vertikalen Gestellabschnitt 14 schließt sich in z-Richtung der obere Abschnitt 16 an. Exemplarisch umfasst der obere Abschnitt 16 einen in dem Beförderungsfahrzeug 1 integrierten Tisch 18. Der integrierte Tisch 18 stellt exemplarisch den vertikal oberen Abschluss des Beförderungsfahrzeugs 2 (ohne den Griff 12) dar. Der obere Abschnitt 16 verfügt exemplarisch über vier längliche, horizontale Gestellelemente 17, die exemplarisch als Profile ausgebildet sind. Die Gestellelemente 17 bilden zusammen einen horizontalen Gestellabschnitt in der Form eines rechteckigen Rahmens, auf dem eine Tischplatte 19 des integrierten Tischs 18 angeordnet ist. Der obere Abschnitt 16 nimmt im Wesentlichen denselben x-y-Bereich wie der untere Abschnitt 3 ein. Der obere Abschnitt 16 hat zweckmäßigerweise eine quaderförmige, insbesondere flache Grundgestalt.

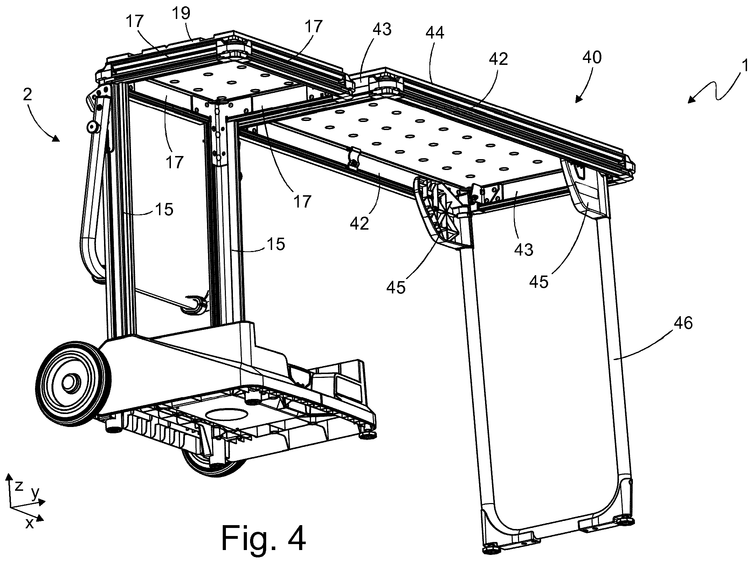

Wie in der Figur 4 gezeigt, sind zwei der horizontalen Gestellelemente 17 parallel zur x-Richtung und zwei der horizontalen Gestellelemente 17 parallel zur y-Richtung ausgerichtet. Ein parallel zur x-Richtung ausgerichtetes Gestellelement 17 verbindet die beiden vertikalen Gestellelemente 15 an ihrem oberen Ende und bildet zusammen mit den beiden Gestellelementen 15 in x-z-Seitenansicht ein umgedrehtes U. Die beiden parallel zur y-Richtung ausgerichteten Gestellelemente 17 erstrecken sich von den oberen Enden der vertikalen Gestellelemente 15 in y-Richtung nach vorne. Auf den von den horizontalen Gestellelementen 17 gebildeten Rahmen ist die Tischplatte 19 aufgesetzt.

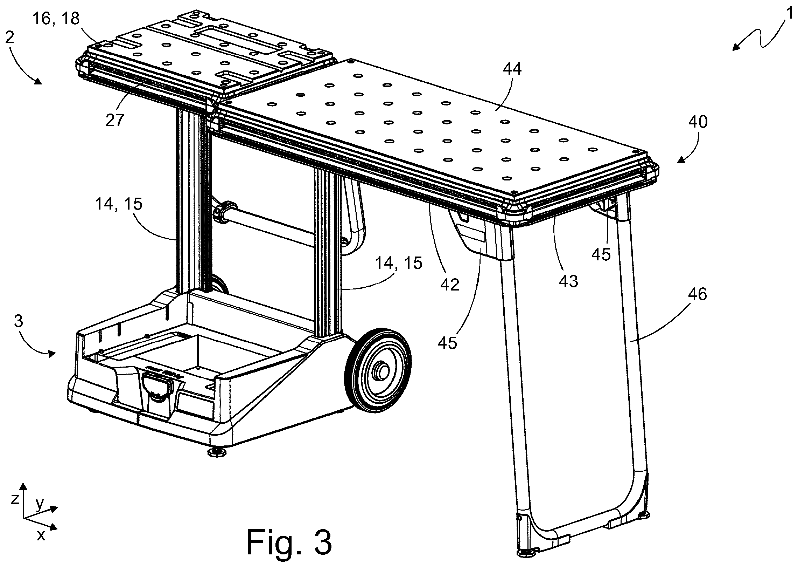

Die Figuren 3 und 4 zeigen die Beförderungsvorrichtung 1 in einer Arbeitskonfiguration. In der Arbeitskonfiguration ist der Arbeitstisch 40 von der Arbeitstisch-Befestigungsschnittstelle 24 abgenommen. Ferner befindet sich der Arbeitstisch 40 in einer horizontalen Ausrichtung; d.h. seine Tischebene ist parallel zu einer x-y-Ebene ausgerichtet. Die in den Figuren 3 und 4 gezeigte Stellung des Arbeitstischs 40 kann auch als stationäre Arbeitsstellung bezeichnet werden. In der Arbeitsstellung wird der Arbeitstisch 40 an einer seiner Stirnseiten von dem Beförderungsfahrzeug 2 abgestützt, insbesondere von dem oberen Abschnitt 16.

Exemplarisch ist am oberen Abschnitt 16 ein Abstützabschnitt 27 vorhanden, an dem der Arbeitstisch 40 insbesondere mit einem Befestigungselement 41 abgestützt wird. Der Abstützabschnitt 27 ist beispielsweise in der Figur 1 zu sehen und exemplarisch an einer, mehreren oder sämtlichen horizontalen Gestellelementen 17 vorhanden. Zweckmäßigerweise umfasst der Abstützabschnitt 27 eine Nut, insbesondere eine V-Nut, in die das Befestigungselement 41 eingreifen kann.

Zweckmäßigerweise greift das Befestigungselement 41 in der Arbeitskonfiguration mit seiner nachstehend noch erläuterten Befestigungsanordnung 48, insbesondere mit den Befestigungsvorsprüngen 53, in die Nut des Abstützabschnitts 27 ein. Zweckmäßigerweise ist der Arbeitstisch 40 in der Arbeitskonfiguration werkzeuglos von dem Beförderungsfahrzeug 2 abnehmbar.

Zweckmäßigerweise ist jeweils an der Vorderseite 10, den beiden Längsseiten 9 und/oder der Rückseite 8 des Beförderungsfahrzeugs 2, insbesondere des oberen Abschnitts 16, ein entsprechender Abstützabschnitt 27 vorgesehen, an dem der Arbeitstisch 40 abgestützt werden kann. Der Arbeitstisch 40 ist folglich wahlweise an der Vorderseite 10, einer ersten Längsseite 9, einer zweiten Längsseite 9 und/oder der Rückseite 8 anbringbar.

In den Figuren 3 und 4 ist der Arbeitstisch 40 an einer Längsseite 9 des Beförderungsfahrzeugs 2 angebracht. Der Arbeitstisch 40 ist mit seiner Längsachse parallel zur y-Richtung ausgerichtet. Exemplarisch ist der Arbeitstisch 40 an den integrierten Tisch 18 angesetzt und verlängert diesen in y-Richtung. Der Arbeitstisch 40 und der integrierte Tisch 18 bilden in einer x-y-Ansicht im Wesentlichen eine längliche, rechteckige Form, deren x-Erstreckung ein Vielfaches, insbesondere wenigstens das zweifache oder dreifache, der y-Erstreckung beträgt. Die Höhe des Arbeitstischs ist vorzugsweise gleich der Höhe des integrierten Tischs 18. Auf der dem Beförderungsfahrzeug 2 abgewandten Stirnseite ist der Arbeitstisch 40 durch eine nachstehend noch näher erläuterte Tischbeinanordnung 46 abgestützt.

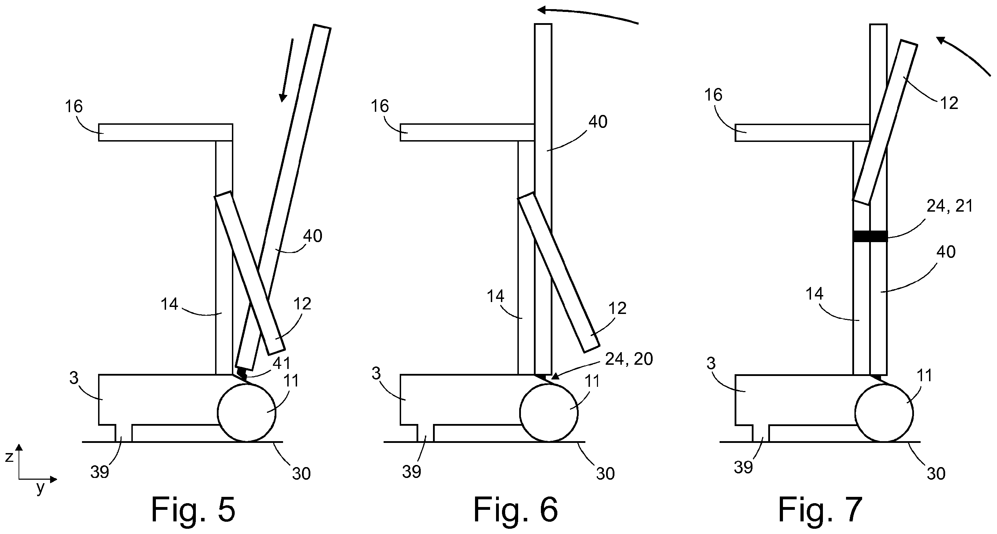

Als nächstes soll auf die Arbeitstisch-Befestigungsschnittstelle 24 näher eingegangen werden, insbesondere unter Bezugnahme auf die Figuren 5 bis 14.

Die Arbeitstisch-Befestigungsschnittstelle 24 dient dazu, den Arbeitstisch 40 an dem Beförderungsfahrzeug 2 zu befestigen, und zwar derart, dass sich der Arbeitstisch 40 stabil von dem Beförderungsfahrzeug 2 transportieren lässt. Vorzugsweise ist die Arbeitstisch-Befestigungsschnittstelle 24 derart ausgebildet, dass der Arbeitstisch 40 in angebrachtem Zustand in sämtliche Raumrichtungen relativ zum Beförderungsfahrzeug 2 fixiert ist.

Zweckmäßigerweise ist die Arbeitstisch-Befestigungsschnittstelle 24 derart ausgebildet, dass der längliche Arbeitstisch 40 in der vertikalen Ausrichtung in dem rückwärtigen Bereich 7 an dem Beförderungsfahrzeug 2 befestigt ist.

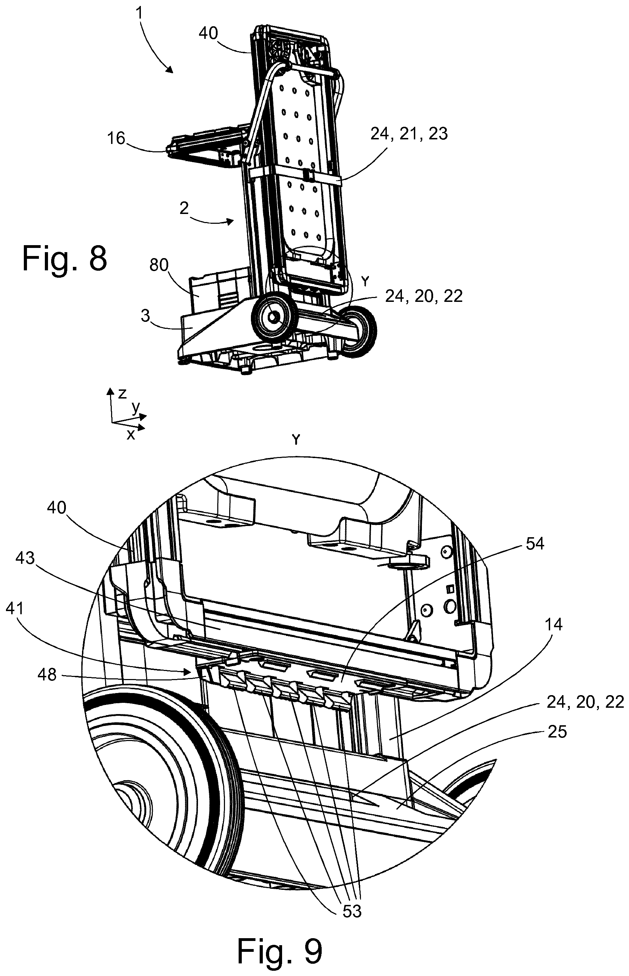

Die Arbeitstisch-Befestigungsschnittstelle 24 umfasst eine erste Befestigungseinrichtung 20 und eine zweite Befestigungseinrichtung 21. Die beiden Befestigungseinrichtungen 20, 21 sind beispielsweise in der Figur 8 gezeigt

Die erste Befestigungseinrichtung 20 ist derart ausgestaltet, dass der Arbeitstisch 40 mit dem Befestigungselement 41 in einer relativ zum vertikalen Gestellabschnitt 14 gekippten Ausrichtung an die erste Befestigungseinrichtung 20 anbringbar ist und durch Verschwenkung hin zu dem vertikalen Gestellabschnitt 14 eine vertikale Fixierung an der ersten Befestigungseinrichtung 20 erzielt wird. Mit der zweiten Befestigungseinrichtung 21 ist der Arbeitstisch 40 dann horizontal fixierbar, insbesondere an dem vertikalen Gestellabschnitt 14.

In den Figuren 5 bis 7 ist die Anbringung des Arbeitstischs 40 an dem Beförderungsfahrzeug 2 schematisch gezeigt. In der Figur 5 wird der (von dem Beförderungsfahrzeug 2 abgenommene) Arbeitstisch 40 in einer relativ zum Gestellabschnitt 14 gekippten Ausrichtung mit dem Befestigungselement 41 voran zu der ersten Befestigungseinrichtung 20 bewegt, und zwar vorzugsweise durch eine lineare Bewegung in eine y-z-Richtung.

Die erste Befestigungseinrichtung 20 ist derart ausgebildet, dass sich das Befestigungselement 41 in dieser gekippten Ausrichtung des Arbeitstischs 40, vorzugsweise nur in dieser gekippten Ausrichtung des Arbeitstischs 40, an der ersten Befestigungseinrichtung 20 anbringen lässt. Exemplarisch verfügt die erste Befestigungseinrichtung 20 über einen Schlitz 22, der derart ausgestaltet ist, dass sich das Befestigungselement 41 nur in der gekippten Ausrichtung des Arbeitstischs 40 in den Schlitz 22 einführen lässt.

In der Figur 6 ist der Arbeitstisch 40 hin zu dem vertikalen Gestellabschnitt 14 verschwenkt, und zwar in einem Zustand, in dem das Befestigungselement 41 an der ersten Befestigungseinrichtung 20 angebracht ist. Zweckmäßigerweise definieren das Befestigungselement 41 und die erste Befestigungseinrichtung 20 eine in x-Richtung verlaufende Achse, um die der Arbeitstisch 40 verschwenkbar ist. Der Arbeitstisch 40 ist vorzugsweise soweit verschwenkbar, bis er an dem vertikalen Gestellabschnitt 14 anliegt und/oder parallel zu diesem ausgerichtet ist. Die erste Befestigungseinrichtung 20 ist derart ausgebildet, dass das Befestigungselement 41 in dem verschwenkten Zustand des Arbeitstischs 40 linear fixiert ist und somit der Arbeitstisch 40 nicht durch eine Linearbewegung, insbesondere nicht durch eine vertikale Linearbewegung, vom Beförderungsfahrzeug 2 abgenommen werden kann.

In der Figur 7 ist der Arbeitstisch 40 durch die zweite Befestigungseinrichtung 21 - exemplarisch durch den Gurt 23 - an dem Gestellabschnitt 14 horizontal fixiert, so dass sich der Arbeitstisch 40 nicht mehr verschwenken lässt. Der Arbeitstisch 40 ist in diesem Zustand in sämtliche Raumrichtungen an dem Beförderungsfahrzeug 2 fixiert und lässt sich nicht von diesem abnehmen.

Zur Abnahme des Arbeitstischs 40 ist es notwendig, die zweite Befestigungseinrichtung 21 zu lösen und den Arbeitstisch 40 weg von dem Gestellabschnitt 14 zu verschwenken, so dass er die in Figur 5 gezeigte gekippte Ausrichtung einnimmt. Der Arbeitstisch 40 lässt sich dann durch eine lineare Bewegung in y-z-Richtung von dem Beförderungsfahrzeug 2 abnehmen.

Im Folgenden soll auf eine exemplarische Ausgestaltung der ersten Befestigungseinrichtung 20 und der zweiten Befestigungseinrichtung 21 im Detail eingegangen werden:
Die erste Befestigungseinrichtung 20 ist an dem unteren Abschnitt 3 vorhanden und in rückwärtiger Richtung hinter dem vertikalen Gestellabschnitt 14 angeordnet. Exemplarisch umfasst die erste Befestigungseinrichtung 20 eine Befestigungsstruktur 29, mit der das Befestigungselement 41 in Eingriff gebracht werden kann, um den Arbeitstisch 40 an der Arbeitstisch-Befestigungsschnittstelle 24 zu befestigen.

Der untere Abschnitt 3 weist im Bereich der ersten Befestigungseinrichtung 20 eine angewinkelte Oberseite 25 auf, die sich zweckmäßigerweise über mehr als die Hälfte der x-Erstreckung des Unterteils 4 erstreckt. Die angewinkelte Oberseite 25 ist beispielsweise in der Figur 9 gezeigt. Der Normalvektor der angewinkelten Oberseite 25 zeigt in eine y-z-Richtung. Die angewinkelte Oberseite 25 dient dazu, dass ein nicht richtig an der ersten Befestigungseinrichtung 20 befestigter Arbeitstisch 40 - beispielsweise ein auf die Oberseite 25 lediglich gestellter Arbeitstisch 40 - mit seinem Befestigungselement 41 nicht stabil auf der Oberseite 25 steht sondern abrutscht.

Die Figur 9 zeigt den in der Figur 8 mit "Y" gekennzeichneten Bereich im Detail.

In der Figur 9 ist insbesondere die erste Befestigungseinrichtung 20 zu sehen, die einen sich in x-Richtung erstreckenden Schlitz 22 zur Aufnahme des Befestigungselements 41 umfasst. Zweckmäßigerweise ist der Schlitz 22 in y-Richtung unmittelbar hinter dem vertikalen Gestellabschnitt 14 angeordnet. Der Schlitz 22 befindet sich auf der angewinkelten Oberseite 25.

In der Figur 9 ist ferner das Befestigungselement 41 zu sehen. Das Befestigungselement 41 ist an einer Stirnseite des Arbeitstischs 40 angeordnet. Exemplarisch ist das Befestigungselement 41 an einem querseitigen Arbeitstisch-Gestellelement 43 angeordnet, das hier exemplarisch als Profilelement ausgebildet ist.

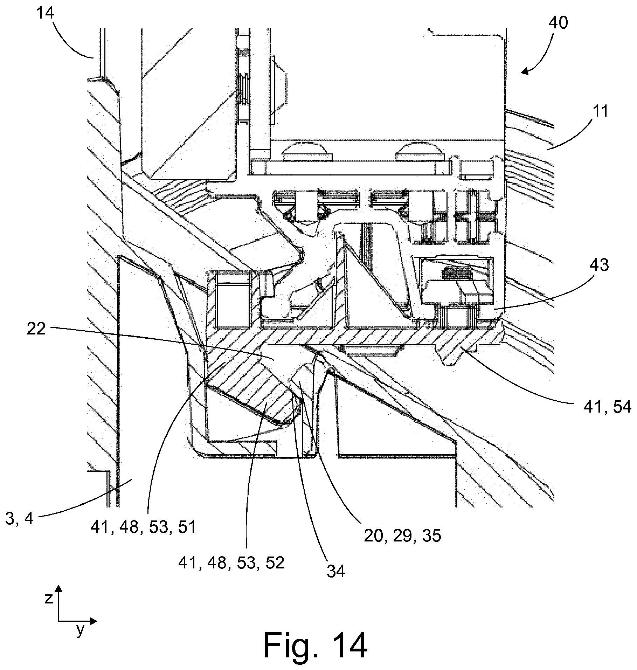

Das Befestigungselement 41 verfügt über eine Befestigungsanordnung 48. In einer y-z-Seitenansicht (in der Transportstellung des Arbeitstischs 40) hat die Befestigungsanordnung 48 eine L-förmige Grundgestalt mit einem vertikal verlaufenden ersten Schenkel 51 und einem sich von dem ersten Schenkel 51 schräg nach unten in eine y-z-Richtung erstreckenden zweiten Schenkel 52. In der Figur 14 ist eine y-z-Seitenansicht der Befestigungsanordnung 48 gezeigt. Exemplarisch umfasst die Befestigungsanordnung 48 über eine Mehrzahl in x-Richtung nebeneinander angeordnete L-förmige Befestigungsvorsprünge 53, die jeweils über einen entsprechenden ersten Schenkel 51 und einen zweiten Schenkel 52 verfügen. Exemplarisch umfasst die Befestigungsanordnung 48 über fünf Befestigungsvorsprünge 53. Zwei benachbarte Befestigungsvorsprünge 53 sind in x-Richtung jeweils voneinander beabstandet. Die Befestigungsanordnung 48 ist in den Schlitz 22 einführbar.

Das Befestigungselement 41 verfügt ferner über einen plattenförmigen Abschnitt 54, mit dem das Befestigungselement 41 an dem Arbeitstisch-Gestellelement 43 angebracht ist. Auf der dem Arbeitstisch-Gestellelement 43 abgewandten Seite des plattenförmigen Abschnitts 54 ist die Befestigungsanordnung 48 angeordnet. Zweckmäßigerweise ist das Befestigungselement 41 ein einstückiges Teil. Die Befestigungsanordnung 48, insbesondere das gesamte Befestigungselement 41, ist zweckmäßigerweise aus einem flexiblen Material, insbesondere Kunststoff, gefertigt.

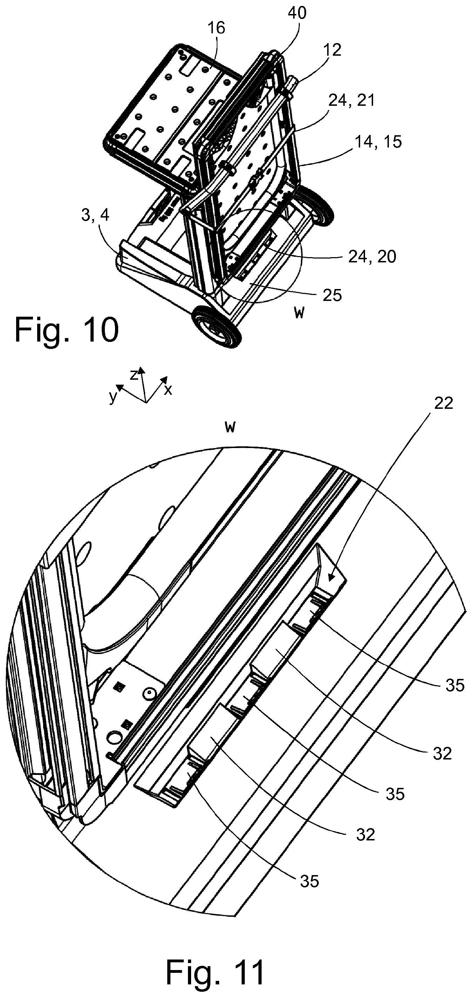

Die Figur 11 zeigt den in der Figur 10 mit "W" gekennzeichneten Bereich im Detail.

In der Figur 11 ist insbesondere der Schlitz 22 zu sehen. Über den Schlitz 22 ist die Befestigungsstruktur 29 zugänglich. In dem Schlitz 22 befinden sich zweckmäßigerweise zwei angewinkelte Verstärkungsstrukturen 32, die in x-Richtung voneinander beabstandet sind. Zwischen den Verstärkungsstrukturen 32 und in x-Richtung vor und hinter den Verstärkungsstrukturen 32 sind Rasthaken 35 vorgesehen. Die Verstärkungsstrukturen 32 und die Rasthaken 35 sind in Entsprechung zu den Befestigungsvorsprüngen 53 angeordnet, so dass bei in den Schlitz 22 eingeführtem Befestigungselement 41 mehrere Befestigungsvorsprünge, insbesondere der erste, dritte und fünfte Befestigungsvorsprung, im Bereich der Rasthaken 35 befinden.

Die Figur 14 zeigt einen y-z-Schnitt der Beförderungsvorrichtung 1. In der Figur 14 ist insbesondere die Befestigungsstruktur 29 und das mit der Befestigungsstruktur 29 in Eingriff stehende Befestigungselement 41 zu sehen. Die Befestigungsstruktur 29 umfasst eine Befestigungsfläche 34, die von der Befestigungsanordnung 48, insbesondere dem zweiten Schenkel 52 der Befestigungsvorsprünge 53, hintergriffen wird. Die Befestigungsfläche 34 wird durch einen horizontalen Vorsprung gebildet. Der horizontale Vorsprung kann zweckmäßigerweise Teil eines L-förmigen Rasthakens 35 sein, der an der Rückwand der Befestigungsstruktur 29 angefedert ist. Vorzugsweise sind in x-Richtung mehrere L-förmige Rasthaken nebeneinander angeordnet, so dass jeweils ein L-förmiger Rasthaken mit einem Befestigungsvorsprung 53 in Eingriff gebracht werden kann. Vorzugsweise ist für jeden zweiten Befestigungsvorsprung 53, insbesondere für den zweiten und vierten Befestigungsvorsprung 53, kein L-förmiger Rasthaken vorhanden und stattdessen vorzugsweise eine Verstärkungsstruktur 32 vorgesehen.

Die Befestigungsanordnung 48 und der Schlitz 22 sind derart ausgestaltet insbesondere dimensioniert, dass sich die Befestigungsanordnung 48 nur in der vorstehend erwähnten, gekippten Stellung des Arbeitstischs 40 in den Schlitz 22 einführen lässt. Um die Befestigungsanordnung 48 in Eingriff mit der Befestigungsstruktur 29 zu bringen, ist ein Verschwenken des Arbeitstischs 40 in eine vertikale Ausrichtung nötig, damit die Befestigungsvorsprünge 53 die Befestigungsfläche 34 hintergreifen.

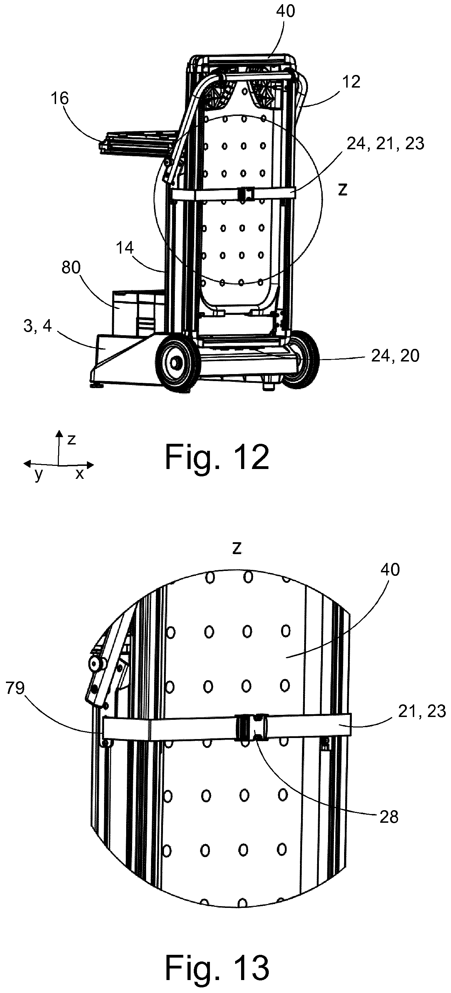

Die Arbeitstisch-Befestigungsschnittstelle 24 verfügt über eine zweite Befestigungseinrichtung 21, die am vertikalen Gestellabschnitt 14 angeordnet ist. Die zweite Befestigungseinrichtung 21 ist insbesondere in den Figuren 12 und 13 gezeigt. Die zweite Befestigungseinrichtung 21 ist exemplarisch im oberen Bereich des vertikalen Gestellabschnitts 14 angeordnet. Die zweite Befestigungseinrichtung 21 umfasst einen Gurt 23, mit dem der Arbeitstisch in der Transportstellung an dem vertikalen Gestellabschnitt 14 in horizontaler Richtung fixierbar ist. Der Gurt 23 ist exemplarisch an zwei Verankerungspunkten 79 befestigt. Die beiden Verankerungspunkte 79 liegen exemplarisch auf gleicher Höhe. Exemplarisch ist der Gurt 23 in der Transportstellung quer um den Arbeitstisch 40 gelegt. Der Gurt 23 hat in diesem Zustand in einer x-y-Ansicht einen U-förmigen Verlauf. Der Gurt 23 verfügt über ein Verschlusselement 28, mit dem er sich zur Freigabe oder Aufnahme des Arbeitstischs 40 öffnen und zur Fixierung des Arbeitstischs 40 schließen lässt. Exemplarisch ist das Verschlusselement 28 in x-Richtung in der Mitte des Gurts 23 angeordnet.

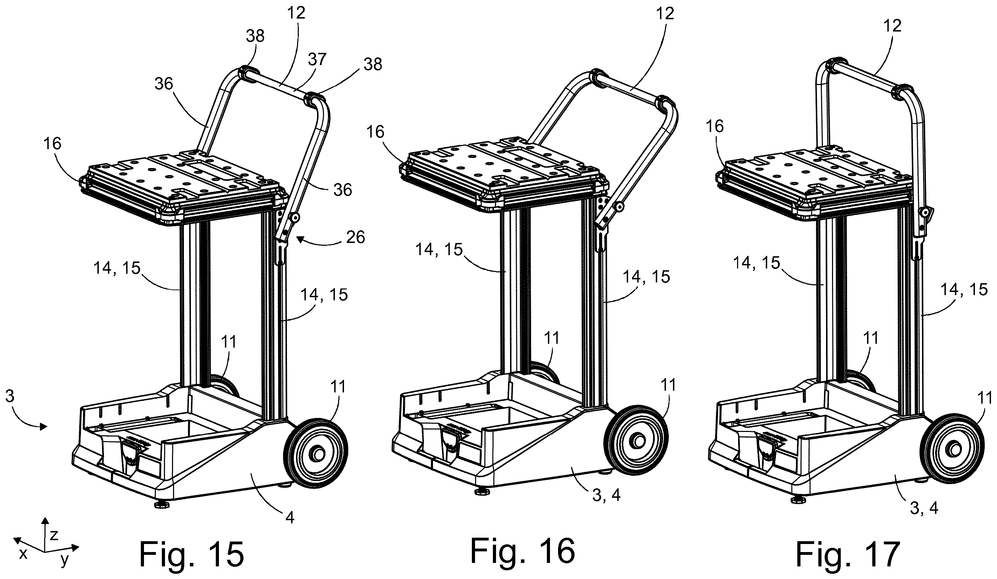

Im Folgenden soll der Griff 12 näher erläutert werden, insbesondere unter Bezugnahme auf die Figuren 15 bis 17:
Der Griff 12 ist zweckmäßigerweise bügelförmig, insbesondere U-förmig ausgebildet. Der Griff 12 verfügt über zwei äußere Abschnitte 36, mit denen der Griff an dem vertikalen Gestellabschnitt 14 verschwenkbar angebracht ist. Die beiden äußeren Abschnitte 36 sind über einen mittleren, in x-Richtung verlaufenden Abschnitt 37 verbunden. Am mittleren Abschnitt 37 sind exemplarisch zwei Gleitelemente 38 angeordnet, mit denen der Griff 12 gegenüber einem Boden abgestützt werden kann, wenn das Beförderungsfahrzeug 2 um 90 Grad um eine x-Achse gekippt ist.

Wenn der Arbeitstisch 40 an der Arbeitstisch-Befestigungsschnittstelle 24 angebracht ist, umläuft der bügelförmige Griff 12 zweckmäßigerweise den Arbeitstisch 40. Insbesondere verläuft der Arbeitstisch 40 durch eine von dem Griff 12 aufgespannte Ebene.

Das Beförderungsfahrzeug 2 verfügt über einen Positioniermechanismus 26, mit dem der Griff 12 in wenigstens zwei verschiedene Schwenkstellungen positioniert und fixiert werden kann. Exemplarisch ist der Griff 12 durch den Positioniermechanismus in drei verschiedenen Schwenkstellungen fixierbar.

Die Figuren 15 bis 17 zeigen den Griff 12 in drei verschiedenen Schwenkstellungen, in denen der Griff 12 über den Positioniermechanismus 26 fixierbar ist.

Die Figur 15 zeigt eine erste Schwenkstellung des Griffs 12. Diese Schwenkstellung kann auch als Fixierstellung bezeichnet werden. In der ersten Schwenkstellung begrenzt der Griff 12 in einem Zustand, in dem der Arbeitstisch 40 an der ersten Befestigungseinrichtung 20 angebracht ist, den maximalen Kippwinkel des Arbeitstischs 40 derart, dass ein Kippwinkel, der von dem Arbeitstisch 40 eingenommen werden muss, um die Befestigung des Arbeitstischs 40 von der Arbeitstisch-Befestigungsschnittstelle 24 zu lösen, nicht eingenommen werden kann. Die Fixierstellung ist beispielsweise auch in der Figur 7 gezeigt: in der Figur 7 befindet sich der Griff 12 in der Fixierstellung - und begrenzt so den Kippwinkel des Arbeitstischs 40, so dass die Anbringung an der ersten Befestigungseinrichtung 20 nicht gelöst werden kann. In der Fixierstellung beträgt der Schwenkwinkel (relativ zur z-Achse) des Griffs 12 insbesondere zwischen 10 und 40 Grad. Zweckmäßigerweise schließt der Griff 12, insbesondere die Gleitelemente 38, in y-Richtung bündig mit den Rädern 11 ab, so dass das Beförderungsfahrzeug 2 in aufrechter Standstellung mit seiner Rückseite 8 möglichst nah an eine gerade Wand gestellt werden kann.

Die Figur 16 zeigt eine zweite Schwenkstellung des Griffs 12. Die zweite Schwenkstellung weist einen größeren Schwenkwinkel als die erste Schwenkstellung auf und ist besonders praktisch für das Einladen des Beförderungsfahrzeugs 2 in ein Fahrzeug. Insbesondere kann das Beförderungsfahrzeug 2 mit seiner Rückseite 8 an die Ladekante eines PKW, beispielsweise eines Kleintransporters, herangefahren werden und dann soweit um die durch die Räder 11 definierte Drehachse gekippt werden, bis der in der zweiten Schwenkstellung befindliche Griff 12 insbesondere mit seinen Gleitelementen 38 auf der Ladefläche des PKW aufliegt. Das Beförderungsfahrzeug 2 kann dann an seinem Unterteil 4 angehoben und in den Laderaum des PKW hineingeschoben werden. Dort kann das Beförderungsfahrzeug 2 wieder aufgerichtet werden, so dass es die senkrechte Standstellung einnimmt. Der Griff 12 kann dann in die erste Schwenkstellung versetzt werden, so dass das Beförderungsfahrzeug 2 mit seiner Rückseite 8 möglichst nah an eine Wand im Laderaum gestellt werden kann. Das beschriebene Verfahren zum Einladen des Beförderungsfahrzeugs 2 ist auch für die Beförderungsvorrichtung 1 anwendbar, also für den Fall, dass der Arbeitstisch 40 und/oder ein oder mehrere kastenförmige Behälter 80 an dem Beförderungsfahrzeug 2 angebracht sind.

Die Figur 17 zeigt eine dritte Schwenkstellung des Griffs 12. In der dritten Schwenkstellung ist der Griff 12 senkrecht nach oben ausgerichtet; der Schwenkwinkel beträgt 0 Grad. In dieser Schwenkstellung kann das Beförderungsfahrzeug 2 besonders gut ohne Arbeitstisch 40 gehandhabt und transportiert werden.

Die Figuren 5 und 6 zeigen den Griff 12 in einer vierten Schwenkstellung. Vorzugsweise ist der Griff 12 in der vierten Schwenkstellung nicht fixierbar. In der vierten Schwenkstellung nimmt der Griff 12 einen Schwenkwinkel von größer 90 Grad und/oder kleiner als 170 Grad ein.

Die vierte Schwenkstellung erlaubt einen Kippwinkel des Arbeitstischs 40, bei welchem Kippwinkel der Arbeitstisch 40 an der Arbeitstisch-Befestigungsschnittstelle 24 anbringbar und von dieser abnehmbar ist. Wie in der Figur 5 gezeigt, kann der Arbeitstisch 40 in der vierten Schwenkstellung des Griffs 12 durch den Griff 12 mit seinem Befestigungselement 41 voraus zu der ersten Befestigungseinrichtung 20 geschoben werden.

Die Figur 3 zeigt den Griff 12 in einer fünften Schwenkstellung. Vorzugsweise ist der Griff 12 in der fünften Schwenkstellung nicht fixierbar. In der fünften Schwenkstellung nimmt der Griff 12 seinen maximalen Schwenkwinkel ein, beispielsweise einen Schwenkwinkel von größer 160 Grad und liegt zweckmäßigerweise an dem vertikalen Gestellabschnitt 14 an.

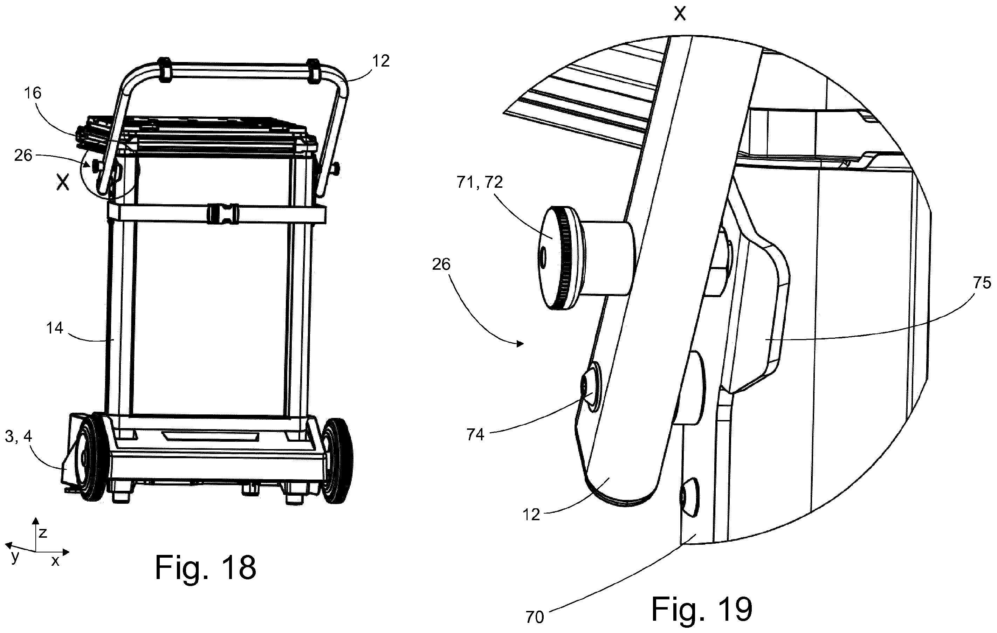

Unter Bezugnahme auf die Figuren 18 bis 20 soll im Folgenden eine exemplarische Ausgestaltung des Positioniermechanismus 26 erläutert werden.

Der Positioniermechanismus 26 ist zweckmäßigerweise ausgebildet, bei einer oder mehreren vorbestimmten Schwenkstellungen, insbesondere zwei oder drei vorbestimmten Schwenkstellungen, den Griff 12 zu fixieren, so dass er fest in der einen oder mehreren vorbestimmten Schwenkstellungen gehalten wird. Bei den Schwenkstellungen, in denen der Griff 12 fixierbar ist, handelt es sich insbesondere um die erste, zweite und/oder dritte Schwenkstellung. Vorzugsweise ist der Positioniermechanismus derart ausgebildet, dass die Fixierung des Griffs 12 automatisch erfolgt, wenn der Griff 12 in eine vorbestimmte Schwenkstellung versetzt wird.

Exemplarisch verfügt der Positioniermechanismus 26 über eine am Griff 12 angeordnete Verriegelungseinrichtung 71 mit einem Verriegelungselement 73, das bei einem oder mehreren vorbestimmten Schwenkwinkeln in eine am vertikalen Gestellabschnitt 14 angeordnete Verriegelungsstruktur in Eingriff gebracht wird. Das Verriegelungselement 73 ist zweckmäßigerweise durch ein (in den Figuren nicht gezeigtes) Federelement vorgespannt, so dass es von selbst - also automatisch - in die Verriegelungsstruktur eingreift, wenn der Griff einen vorbestimmten Schwenkwinkel einnimmt.

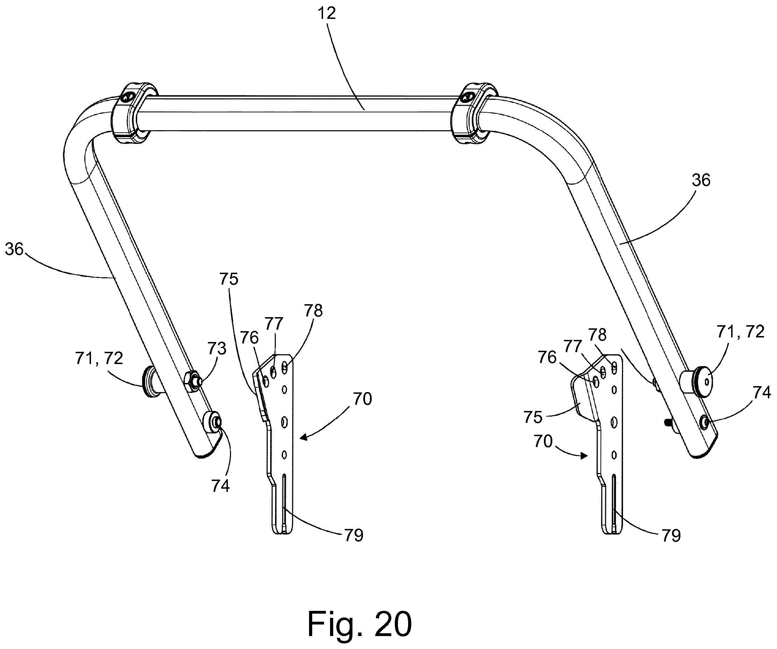

Exemplarisch umfasst die Verriegelungsstruktur mehrere Löcher 76, 77, 78, die in der Figur 20 gezeigt sind. Die Verriegelungseinrichtung 71 umfasst als Verriegelungselement 73 exemplarisch einen Verriegelungsbolzen, der durch Verschwenken des Griffs 12 wahlweise über einem der Löcher 76, 77, 78 positioniert werden kann, so dass der Verriegelungsbolzen in dieses Loch einschnappt, wodurch der Griff 12 in der zugehörigen Schwenkstellung fixiert wird. Die Löcher 76, 77, 78 liegen zweckmäßigerweise auf einer kreisabschnittförmigen Bahn, die von dem Verriegelungselement 73 beim Verschwenken des Griffs 12 abgefahren wird. Vorzugsweise ist das Loch 77 der ersten Schwenkstellung zugehörig, das Loch 76 der zweiten Schwenkstellung und das Loch 78 der dritten Schwenkstellung zugehörig.

Die Verriegelungseinrichtung 71 verfügt zweckmäßigerweise über einen Betätigungsabschnitt 72, mit dem sich der Eingriff des Verriegelungselements 73 in die Verriegelungsstruktur - und somit die Fixierung des Griffs 12 in einer bestimmten Schwenkstellung - manuell lösen lässt. Exemplarisch handelt es sich bei dem Betätigungsabschnitt 72 um einen Knauf, mit dem der Verriegelungsbolzen aus einem Loch 76, 77, 78 gezogen werden kann.

Die Verriegelungseinrichtung 71 ist zweckmäßigerweise in einem Endbereich eines äußeren Abschnitts 36 des Griffs 12 angeordnet. Zweckmäßigerweise ist der Betätigungsabschnitt 72 auf einer dem Gestellabschnitt 14 abgewandten Seite des äußeren Abschnitts 36 angeordnet und das Verriegelungselement 73 ist auf einer dem Gestellabschnitt 14 zugewandten Seite des äußeren Abschnitts 36 angeordnet. Vorzugsweise durchsetzt die Verriegelungseinrichtung 71 den äußeren Abschnitt 36. Exemplarisch ist an beiden äußeren Abschnitten 36 des Griffs je eine Verriegelungseinrichtung 71 vorhanden.

Exemplarisch sind die Löcher 76, 77, 78 auf einem plattenförmigen Teil 70 angeordnet, das zweckmäßigerweise zwischen dem vertikalen Gestellabschnitt 14, insbesondere einem Gestellelement 15, und dem Griff 12 angeordnet ist. Das plattenförmige Teil 70 ist insbesondere am vertikalen Gestellabschnitt 14 befestigt. Zweckmäßigerweise sind zwei plattenförmige Teile 70 vorhanden, wobei jedes plattenförmige Teil 70 auf einer anderen Längsseite 9 des Beförderungsfahrzeugs 2, insbesondere des vertikalen Gestellabschnitts 14, zweckmäßigerweise an einem anderen Gestellelement 15, angeordnet ist.

Der Positioniermechanismus 26 verfügt ferner über eine angewinkelte Fläche 75, über die das Verriegelungselement 73 bei Verschwenken des Griffs 12 geführt und dadurch vorgespannt wird. Zweckmäßigerweise ist die angewinkelte Fläche 75 derart angeordnet, dass das Verriegelungselement 73 bei Verschwenken des Griffs 12 aus der vorgenannten vierten Schwenkstellung erst über die angewinkelte Fläche 75 geführt wird, bevor das Verriegelungselement 73 die Verriegelungsstruktur, insbesondere eines der Löcher 76, 77, 78, erreicht. Die angewinkelte Fläche 75 ist exemplarisch als Abschnitt des plattenförmigen Teils 70, insbesondere als angewinkelte Lasche ausgebildet.

Durch die angewinkelte Fläche 75 wird es möglich, den Griff 12 aus der vierten Schwenkstellung heraus in die zweite Schwenkstellung zu versetzen, ohne die Verriegelungseinrichtung 71, insbesondere den Betätigungsabschnitt 72, manuell betätigen zu müssen.

Jedes plattenförmige Teil 70 umfasst ferner exemplarisch einen Verankerungspunkt 79 für den Gurt 23, insbesondere einen Verankerungsschlitz, der vorzugsweise vertikal verläuft und insbesondere im unteren Bereich des plattenförmigen Teils 70 angeordnet ist - also unterhalb der Löcher 76, 77, 78.

An dem Griff 12, insbesondere an dem äußeren Abschnitt 36, ist ferner ein Drehlager 74 vorhanden, über das der Griff 12 verschwenkbar an dem vertikalen Gestellabschnitt 14, insbesondere über das plattenförmige Teil 70, gelagert ist. Zweckmäßigerweise ist an beiden äußeren Abschnitten 36 des Griffs 12 ein jeweiliges Drehlager 74 vorhanden.

Im Folgenden soll näher auf den Arbeitstisch 40 eingegangen werden, insbesondere unter Bezugnahme auf die Figuren 3 und 4, wo der Arbeitstisch mit seiner Längsachse exemplarisch in x-Richtung ausgerichtet ist.

Der Arbeitstisch 40 hat eine längliche, insbesondere rechteckige Grundgestalt. Zweckmäßigerweise ist der Arbeitstisch 40 wenigstens 1,5 mal, insbesondere doppelt so lang wie breit. Der Arbeitstisch 40 verfügt über ein rahmenförmiges Arbeitstisch-Gestell, das längsseitige Arbeitstisch-Gestellelemente 42 und querseitige Arbeitstisch-Gestellelemente 43 umfasst. Die längsseiteigen Arbeitstisch-Gestellelemente 42 und die querseitigen Arbeitstisch-Gestellelemente 43 sind zweckmäßigerweise stangenförmig und insbesondere als Profile ausgebildet. Auf das rahmenförmige Arbeitstisch-Gestell ist eine Tischplatte 44 aufgesetzt.

Der Arbeitstisch 40 verfügt über die ausklappbare Tischbeinanordnung 46, die exemplarisch U-förmig ist. Die (im ausgeklappten Zustand) vertikalen Abschnitte der Tischbeinanordnung 46 sollen auch als Tischbeine bezeichnet werden. Die Tischbeinanordnung 46 ist zweckmäßigerweise an der Unterseite des Arbeitstischs 40 angeordnet, vorzugsweise im Bereich einer Stirnseite des Arbeitstischs 40. Die Tischbeinanordnung 46 ist insbesondere an dem Arbeitstisch-Gestell verschwenkbar gelagert. Die Schwenkachse der Tischbeinanordnung 46 ist zweckmäßigerweise parallel zu den querseitigen Arbeitstisch-Gestellelementen 43 ausgerichtet. Das Arbeitstisch-Gestell und die Unterseite der Tischplatte 44 definieren ein Aufnahmevolumen, das die Tischbeinanordnung 46 im eingeklappten Zustand aufnimmt, insbesondere vollständig. Der eingeklappte Zustand der Tischbeinanordnung 46 kann auch als Transportstellung und der ausgeklappte Zustand als Arbeitsstellung bezeichnet werden.

Der Arbeitstisch 40 verfügt über Fixierelemente 45, mit denen die Tischbeinanordnung 46 in der Arbeitsstellung fixiert werden kann. Exemplarisch handelt es sich bei den Fixierelementen 45 um plattenförmige Elemente, die jeweils am oberen Ende an einem Tischbein vorgesehen sind und um das jeweilige Tischbein drehbar gelagert sind. Der Normalvektor der plattenförmigen Elemente ist dabei stets orthogonal zu der Längsachse der Tischbeine ausgerichtet; d.h. jedes Tischbein liegt stets in der Plattenebene des zugehörigen plattenförmigen Elements. Die plattenförmigen Elemente können durch Verschwenken wahlweise in eine Verriegelungsstellung und eine Entriegelungsstellung versetzt werden. In der Verriegelungsstellung, die beispielsweise in den Figuren 3 und 4 gezeigt ist, sind die plattenförmigen Elemente parallel zu den längsseitigen Arbeitstisch-Gestellelementen 42 ausgerichtet und liegen mit ihren Oberseiten an der Unterseite der Tischplatte 44 an, so dass die Tischbeinanordnung 46 in der ausgeklappten Stellung verriegelt ist und nicht eingeklappt werden kann. In der Entriegelungsstellung sind die plattenförmigen Elemente parallel zu den querseitigen Arbeitstisch-Gestellelementen 43 ausgerichtet, so dass die Tischbeinanordnung 46 eingeklappt werden kann.

Der Arbeitstisch 40 ist in Entsprechung zu dem integrierten Tisch 18 ausgebildet. Insbesondere umfassen die Arbeitstisch-Gestellelemente 42, 43 und die horizontalen Gestellelemente 17 des integrierten Tischs 18 die gleichen Profile bzw. Profile gleicher Art, vorzugsweise gleichen Querschnitts.

Vorzugsweise umfassen die Arbeitstisch-Gestellelemente 42 ebenfalls einen oder mehrere Abstützabschnitte 27, beispielsweise eine Nut, insbesondere eine V-Nut, an denen ein oder mehrere weitere Arbeitstische 40 mit ihrem Befestigungselement 41 abgestützt werden können.

Die Tischplatte 44 verfügt zweckmäßigerweise über ein Lochmuster, insbesondere ein regelmäßiges Lochmuster, vorzugsweise ein Lochraster. Vorzugsweise verfügt die Tischplatte 19 des integrierten Tischs 18 über ein Lochmuster, insbesondere ein regelmäßiges Lochmuster, vorzugsweise ein Lochraster. Zweckmäßigerweise haben die Lochmuster, insbesondere die Lochraster, der beiden Tischplatten 44, 19 die gleiche Lochbeabstandung.

Im Folgenden soll ein Verfahren beschrieben werden, wie die Beförderungsvorrichtung 1 von der Transportkonfiguration (vgl. Fig. 1) in die Arbeitskonfiguration (vgl. Fig. 3) versetzt werden kann.

Zunächst wird die Befestigung des Arbeitstischs 40 an der Arbeitstisch-Befestigungsschnittstelle 24 gelöst. Zu diesem Zweck wird die zweite Befestigungseinrichtung 21 - hier der Gurt 23 - gelöst. Ferner wird die erste Befestigungseinrichtung 20 gelöst, und zwar indem der Arbeitstisch 40 in Richtung weg von dem vertikalen Gestellabschnitt 14 in eine vorbestimmte Kippstellung versetzt wird. Um diese Kippstellung zu ermöglichen, wird zweckmäßigerweise der Griff 12 in eine entsprechende Schwenkstellung versetzt, beispielsweise in die vorstehend erläuterte vierte Schwenkstellung.

Der Arbeitstisch 40 kann dann vollständig von dem Beförderungsfahrzeug 2 abgenommen werden. Als nächstes wird die Tischbeinanordnung 46 ausgeklappt und durch Verschwenken der Fixierelemente 45 in dem ausgeklappten Zustand verriegelt.

Der Arbeitstisch 40 wird dann in eine horizontale Ausrichtung gebracht und mit seinem Befestigungselement 41 an einem Abstützabschnitt 27 des Beförderungsfahrzeugs 2 angebracht. Die Beförderungsvorrichtung 1 befindet sich dann in der Arbeitskonfiguration.

Nachstehend sollen die Behälter-Befestigungsschnittstelle 6 und der kastenförmige Behälter 80 näher erläutert werden, insbesondere unter Bezugnahme auf die Figur 1.

Die Behälter-Befestigungsschnittstelle 6 dient dazu, den kastenförmigen Behälter 80 an dem unteren Abschnitt 3, insbesondere dem Unterteil 4, des Beförderungsfahrzeugs 2 zu befestigen, vorzugsweise derart, dass der kastenförmige Behälter 80 in sämtliche Raumrichtungen fixiert ist.

Zweckmäßigerweise ist die Behälter-Befestigungsschnittstelle 6 derart ausgebildet, dass sich der Behälter 80 werkzeuglos an der Behälter-Befestigungsschnittstelle 6 befestigen und/oder von dieser lösen lässt.

Exemplarisch verfügt die Behälter-Befestigungsschnittstelle 6 über ein bewegliches Kopplungselement 91, das exemplarisch als Drehriegel, insbesondere als T-förmiger Drehriegel, ausgebildet ist. Das bewegliche Kopplungselement 91 lässt sich manuell in verschiedene Drehstellungen versetzen, um die Befestigung des Behälters 80 an dem Beförderungsfahrzeug 2 wahlweise herzustellen oder zu lösen.

Das bewegliche Kopplungselement 91 ist exemplarisch an der Vorderseite 10 des unteren Abschnitts 3 angebracht und vorzugsweise drehbar gelagert, insbesondere um eine y-Drehachse.

Die Behälter-Befestigungsschnittstelle 6 umfasst vorzugsweise ferner eine nicht-bewegliche Kopplungsstruktur 92, die exemplarisch zwei in der Stellfläche 5 angeordnete Vertiefungen umfasst. Die nicht-bewegliche Kopplungsstruktur 92 lässt sich in Eingriff mit nachstehend noch erläuterten unteren Behälter-Kopplungsmitteln 82, insbesondere Standfüßen 85 bringen.

Die Behälter-Befestigungsschnittstelle 6 und/oder das Beförderungsfahrzeug 2 sind insbesondere derart ausgeführt, dass beim Anbringen und/oder Abnehmen eines oder mehrerer Behälter 80 an der Behälter-Befestigungsschnittstelle 6 das Beförderungsfahrzeug 2, insbesondere der vertikale Gestellabschnitt 4, nicht zerlegt oder umgebaut werden muss.

Vorzugsweise ist die Behälter-Befestigungsschnittstelle 6 und/oder der Behälter 80 derart ausgebildet, dass der Behälter 80 in einem an dem Beförderungsfahrzeug 2 fixierten Zustand mit seiner Unterseite und Vorderseite, insbesondere nur mit seiner Unterseite und Vorderseite, an dem Beförderungsfahrzeug 2 befestigt ist.

Nun zu dem Behälter 80:
Der Behälter 80 verfügt über eine quaderförmige Grundgestalt. Exemplarisch verfügt der Behälter 80 über ein Unterteil 101 und einen auf das Unterteil 101 aufgesetzten Deckel 102. Der Deckel 102 ist zweckmäßigerweise an dem Unterteil 101 angelenkt. Vorzugsweise weisen das Unterteil 101 und der Deckel 102 die gleiche horizontale Außenkontur auf. An der Oberseite des Behälters 80 ist exemplarisch ein insbesondere ausklappbarer Tragegriff 103 vorgesehen.

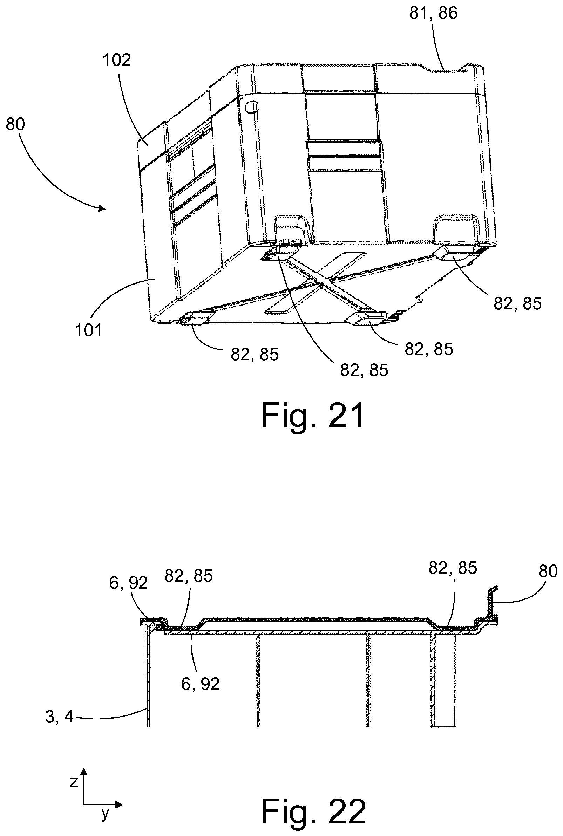

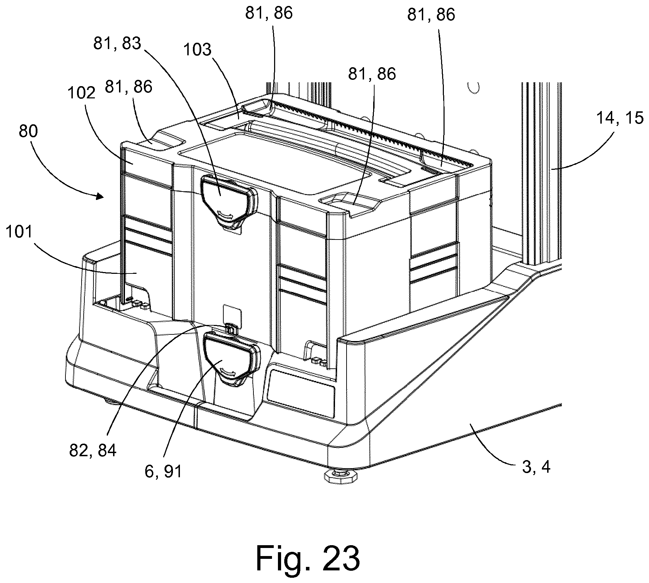

Der Behälter 80 verfügt über obere Behälter-Kopplungsmittel 81 und untere Behälter-Kopplungsmittel 82. Die Behälter-Kopplungsmittel 81, 82 sind insbesondere in den Figuren 21, 22 und 23 zu sehen. Exemplarisch sind die oberen Behälter-Kopplungsmittel 81 in Entsprechung zu den unteren Behälter-Kopplungsmitteln 82 ausgebildet, so dass sich ein weiterer, mit identischen Behälter-Kopplungsmitteln ausgestatteter Behälter 80 auf den vorliegenden Behälter 80 aufsetzen lässt und mit den unteren Behälter-Kopplungsmitteln 82 des weiteren Behälters 80 an den oberen Behälter-Kopplungsmitteln 81 des vorliegenden Behälters 80 befestigen lässt, insbesondere derart, dass die beiden Behälter 80 in sämtliche Raumrichtungen zueinander fixiert sind und einen stabilen vertikalen Stapel 90 bilden.

Die unteren Behälter-Kopplungsmittel 82 umfassen insbesondere eine erste nicht-bewegliche Kopplungsstruktur 84, beispielsweise einen Kopplungsvorsprung, der mit dem beweglichen Kopplungselement 91 in Eingriff gebracht werden kann. Die nicht-bewegliche Kopplungsstruktur 84 ist insbesondere an der Vorderseite des Behälters 80 angeordnet.

Die unteren Behälter-Kopplungsmittel umfassen ferner eine zweite nicht-bewegliche Kopplungsstruktur 85, beispielsweise Standfüße, die mit der nicht-beweglichen Kopplungsstruktur 92 in Eingriff gebracht werden können und an der Unterseite des Behälters 80 angeordnet sind.

Die Figur 22 zeigt einen vertikalen Schnitt durch den kastenförmigen Behälter 80 in einem Zustand, in dem dessen als Standfüße ausgebildete zweite nicht-bewegliche Kopplungsstruktur 85 mit der nicht-beweglichen Kopplungsstruktur 92 der Behälter-Schnittstelle 6 in Eingriff steht. Exemplarisch verfügt die nicht-bewegliche Kopplungsstruktur 92 einen Vorsprung, der von den Standfüßen, insbesondere den hinteren Standfüßen, zweckmäßigerweise nur den hinteren Standfüßen, hintergriffen wird.

Die oberen Behälter-Kopplungsmittel 81 umfassen zweckmäßigerweise ein bewegliches Kopplungselement 83, exemplarisch einen Drehriegel, insbesondere einen T-förmigen Drehriegel, der zweckmäßigerweise in Entsprechung zu dem beweglichen Kopplungselement 91 ausgebildet ist. Das bewegliche Kopplungselement 83 kann insbesondere mit der ersten nicht-beweglichen Kopplungsstruktur 84 eines weiteren Behälters 80 in Eingriff gebracht werden. Ferner kann das bewegliche Kopplungselement 83 dazu dienen, den Deckel 102 zu verriegeln.

Die oberen Behälter-Kopplungsmittel 81 umfassen ferner vorzugsweise eine dritte nicht-bewegliche Kopplungsstruktur 86. Die dritte nicht-bewegliche Kopplungsstruktur 86 kann zweckmäßigerweise mit der zweiten nicht-beweglichen Kopplungsstruktur 85 eines weiteren Behälters 80 in Eingriff gebracht werden. Die dritte nicht-bewegliche Kopplungsstruktur 86 umfasst vorzugsweise eine oder mehrere Vertiefungen und ist an der Oberseite des Behälters 80 angeordnet.

Der Behälter 80 ist insbesondere derart ausgebildet, dass der Behälter 80 in einem an einem weiteren Behälter 80 fixierten Zustand mit seiner Unterseite und Vorderseite, insbesondere nur mit seiner Unterseite und Vorderseite, an dem weiteren Behälter 80 befestigt ist.

Die vorstehend beschriebenen Behälter 80 können beispielsweise in Entsprechung zu den in der EP2315701B1 beschriebenen Behältern ausgebildet sein.

## Patentansprüche

1. Beförderungsvorrichtung (1) mit einem Beförderungsfahrzeug (2), das Folgendes umfasst:
- einen unteren Abschnitt (3), der über eine Stellfläche (5) verfügt, auf der ein Stapel (90) aus kastenförmigen Behältern (80) abstellbar ist, und eine Behälter-Befestigungsschnittstelle (6), mit der der Stapel (90) in einem Zustand, in dem er auf der Stellfläche (5) abgestellt ist, an dem unteren Abschnitt (3) befestigbar ist,
- zwei in einem rückwärtigen Bereich (7) des Beförderungsfahrzeugs (2) am unteren Abschnitt (3) angeordnete Räder (11), mit denen das Beförderungsfahrzeug (2) in einer Kippstellung gegenüber einem Boden abgestützt und bewegt werden kann,
- einen von dem unteren Abschnitt (3) sich nach oben erstreckenden vertikaler Gestellabschnitt (14), der in dem rückwärtigen Bereich (7) angeordnet ist und an dem ein Griff (12) vorhanden ist, mit dem das Beförderungsfahrzeug (2) manuell in die Kippstellung versetzbar und relativ zum Boden bewegbar ist,
wobei die Beförderungsvorrichtung (1) ferner umfasst:
einen länglichen Arbeitstisch (40) sowie eine am Beförderungsfahrzeug (2) vorhandene Arbeitstisch-Befestigungsschnittstelle (24), mit der der längliche Arbeitstisch (40) in einer vertikalen Ausrichtung seiner Längsachse an dem Beförderungsfahrzeug (2) befestigbar ist, um eine Transportstellung einzunehmen, in der der längliche Arbeitstisch (40) durch das Beförderungsfahrzeug (2) beförderbar ist, wobei der Arbeitstisch (40) von dem Beförderungsfahrzeug (2) werkzeuglos vollständig abnehmbar ist und der Arbeitstisch (40) über eine ausklappbare Tischbeinanordnung (46) verfügt, wobei die Arbeitstisch-Befestigungsschnittstelle (24) eine am unteren Abschnitt (3) angeordnete erste Befestigungseinrichtung (20) umfasst, wobei die erste Befestigungseinrichtung (20) eine Befestigungsstruktur (29) umfasst, die mit einem am Arbeitstisch (40) angeordneten Befestigungselement (41) in Eingriff gebracht werden kann, und wobei das Beförderungsfahrzeug (2) über einen Abstützabschnitt (27) verfügt, an dem der Arbeitstisch (40) mit dem Befestigungselement (41) in einer horizontalen Ausrichtung angebracht werden kann, um eine stationäre Arbeitsstellung einzunehmen.

2. Beförderungsvorrichtung (1) nach Anspruch 1, **dadurch gekennzeichnet, dass** der Arbeitstisch (40) durch die Arbeitstisch-Befestigungsschnittstelle (24) in dem rückwärtigen Bereich (7) an dem Beförderungsfahrzeug (2) befestigbar ist.

3. Beförderungsvorrichtung (1) nach einem der voranstehenden Ansprüche, **dadurch gekennzeichnet, dass** der Arbeitstisch (40) in der Transportstellung in rückwärtiger Richtung (y) hinter dem vertikalen Gestellabschnitt (14) angeordnet ist.

4. Beförderungsvorrichtung (1) nach einem der voranstehenden Ansprüche, **dadurch gekennzeichnet, dass** der untere Abschnitt (3) im Bereich der ersten Befestigungseinrichtung (20) eine angewinkelte Oberseite (25) aufweist.

5. Beförderungsvorrichtung (1) nach einem der voranstehenden Ansprüche, **dadurch gekennzeichnet, dass** die erste Befestigungseinrichtung (20) derart ausgestaltet ist, dass der Arbeitstisch (40) mit dem Befestigungselement (41) in einer relativ zum vertikalen Gestellabschnitt (14) gekippten Ausrichtung an die erste Befestigungseinrichtung (20) anbringbar ist und durch Verschwenkung des Arbeitstischs (40) hin zu dem vertikalen Gestellabschnitt (14) an der ersten Befestigungseinrichtung (20) fixierbar ist.

6. Beförderungsvorrichtung (1) nach einem der voranstehenden Ansprüche, **dadurch gekennzeichnet, dass** die Arbeitstisch-Befestigungsschnittstelle (24) über eine zweite Befestigungseinrichtung (21) verfügt, die am vertikalen Gestellabschnitt (14) angeordnet ist.

7. Beförderungsvorrichtung (1) nach Anspruch 6, **dadurch gekennzeichnet, dass** die zweite Befestigungseinrichtung (21) einen Gurt (23) umfasst, mit dem der Arbeitstisch (40) in der Transportstellung an dem vertikalen Gestellabschnitt (14) fixierbar ist.

8. Beförderungsvorrichtung (1) nach einem der voranstehenden Ansprüche, **dadurch gekennzeichnet, dass** die Beförderungsvorrichtung (1) über einen Positioniermechanismus (26) verfügt, mit dem der Griff (12) in wenigstens zwei verschiedene Stellungen versetzbar ist.

9. Beförderungsvorrichtung nach Anspruch 8, **dadurch gekennzeichnet, dass** der Griff (12) in eine erste Stellung versetzbar ist, in der er in einem Zustand, in dem sich der Arbeitstisch (40) in der Transportstellung befindet, den maximalen Kippwinkel des Arbeitstischs (40) so begrenzt, dass ein Kippwinkel, der von dem Arbeitstisch (40) eingenommen werden muss, um die Befestigung des Arbeitstischs (40) an der Arbeitstisch-Befestigungsschnittstelle (24) zu lösen, nicht eingenommen werden kann.

10. Beförderungsvorrichtung (1) nach einem voranstehenden Anspruch, **dadurch gekennzeichnet, dass** der Arbeitstisch (40) über wenigstens ein Fixierelement (45) verfügt, mit dem die Tischbeinanordnung (46) in einer ausgeklappten Arbeitsstellung fixierbar ist.

11. Beförderungsvorrichtung (1) nach einem der voranstehenden Ansprüche, umfassend den Stapel (90), der auf der Stellfläche (5) angeordnet ist und mit der Behälter-Befestigungsschnittstelle (6) an dem unteren Abschnitt (3) befestigt ist.

12. Beförderungsvorrichtung (1) nach einem der voranstehenden Ansprüche, wobei der Arbeitstisch (40) in der stationären Arbeitsstellung von der Arbeitstisch-Befestigungsschnittstelle (24) abgenommen ist.

## Claims

1. A transport device (1) with a transport vehicle (2) comprising:
- a lower section (3) having a support surface (5) on which a stack (90) of box-shaped containers (80) can be placed, and a container attachment interface (6) with which the stack (90) can be attached to the lower section (3) in a state in which the stack (90) is placed on the support surface (5),
- two wheels (11) arranged in a rearward area (7) of the transport vehicle (2) at the lower section (3), with which wheels (11) the transport vehicle (2) can be supported and moved in a tilted position relative to a floor,
- a vertical frame section (14) extending upwardly from the lower section (3), which vertical frame section (14) is arranged in the rearward area (7) and on which a handle (12) is provided with which the transport vehicle (2) can be manually moved into the tilted position and moved relative to the floor,
Wherein the transport device (1) further comprises:
an elongated worktable (40) and a worktable attachment interface (24) provided on the transport vehicle (2), by means of which the elongated worktable (40) can be attached to the transport vehicle (2) in a vertical orientation of its longitudinal axis in order to assume a transport position in which the elongated worktable (40) can be transported by the transport vehicle (2), wherein the worktable (40) is completely removable from the transport vehicle (2) tool-free and the worktable (40) has a unfoldable table leg arrangement (46), wherein the worktable attachment interface (24) comprises a first attachment device (20) arranged at the lower section (3), wherein the first attachment device (20) comprises an attachment structure (29) engageable with an attachment element (41) arranged at the worktable (40), and
wherein the transport vehicle (2) has a support section (27) to which the worktable (40) can be attached in a horizontal orientation with the attachment element (41) in order to assume a stationary working position.

2. The transport device (1) according to claim 1, **characterized in that** the worktable (40) can be attached to the transport vehicle (2) in the rearward area (7) by means of the worktable attachment interface (24).

3. The transport device (1) according to one of the preceding claims, **characterized in that** the worktable (40) in the transport position is arranged in the rearward direction (y) behind the vertical frame section (14).

4. The transport device (1) according to one of the preceding claims, **characterized in that** the lower section (3) has an angled upper side (25) in the area of the first attachment device (20).

5. The transport device (1) according to one of the preceding claims, **characterized in that** the first attachment device (20) is adapted such that the worktable (40) can be mounted with the attachment element (41) to the first attachment device (20) in a tilted orientation relative to the vertical frame section (14) and can be fixed to the first attachment device (20) by pivoting the worktable (40) towards the vertical frame section (14).

6. The transport device (1) according to one of the preceding claims, **characterized in that** the worktable attachment interface (24) has a second attachment device (21) arranged on the vertical frame section (14).

7. The transport device (1) according to claim 6, **characterized in that** the second attachment device (21) comprises a belt (23) with which the worktable (40) can be fixed to the vertical frame section (14) in the transport position.

8. The transport device (1) according to one of the preceding claims, **characterized in that** the transport device (1) has a positioning mechanism (26) with which the handle (12) can be moved into at least two different positions.

9. The transport device according to claim 8, **characterized in that** the handle (12) is movable into a first position in which, in a state in which the worktable (40) is in the transport position, the handle (12) limits the maximum tilt angle of the worktable (40) such that a tilt angle that must be assumed by the worktable (40) to release the attachment of the worktable (40) to the work table attachment interface (24) cannot be assumed.

10. The transport device (1) according to one of the preceding claims, **characterized in that** the worktable (40) has at least one fixing element (45) with which the table leg arrangement (46) can be fixed in an unfolded working position.

11. The transport device (1) according to one of the preceding claims, comprising the stack (90) arranged on the support surface (5) and attached to the lower section (3) by the container attachment interface (6).

12. The transport device (1) according to one of the preceding claims, wherein the worktable (40) in the stationary working position is completely removed from the worktable attachment interface (24).

## Revendications

1. Dispositif de transport (1) avec un véhicule de transport (2) qui comprend ce qui suit :
- une section inférieure (3), qui dispose d'une surface de pose (5) sur laquelle une pile (90) de contenants (80) en forme de caisson peut être posée, et une interface de fixation de contenant (6), avec laquelle la pile (90) peut être fixée sur la section inférieure (3) dans un état dans lequel elle est posée sur la surface de pose (5),
- deux roues (11) disposées sur la section inférieure (3) dans une zone arrière (7) du véhicule de transport (2), avec lesquelles le véhicule de transport (2) peut être soutenu et déplacé dans une position de basculement par rapport à un sol,
- une section de bâti verticale (14) s'étendant vers le haut depuis la section inférieure (3), qui est disposée dans la zone arrière (7) et sur laquelle est présente une poignée (12) avec laquelle le véhicule de transport (2) peut être amené manuellement dans une position de basculement et peut être déplacé par rapport au sol,
dans lequel le dispositif de transport (1) comprend en outre :
une table de travail allongée (40) ainsi qu'une interface de fixation de table de travail (24) présente sur le véhicule de transport (2), avec laquelle la table de travail allongée (40) peut être fixée dans un alignement vertical de son axe longitudinal sur le véhicule de transport (2) pour adopter une position de transport, dans laquelle la table de travail allongée (40) peut être transportée par le véhicule de transport (2), dans lequel la table de travail (40) peut être entièrement retirée sans outil du véhicule de transport (2) et la table de travail (40) dispose d'un ensemble de pieds de table (46) rabattable, dans lequel l'interface de fixation de table de travail (24) comprend un premier système de fixation (20) disposé sur la section inférieure (3), dans lequel le premier système de fixation (20) comprend une structure de fixation (29), qui peut être amenée en prise avec un élément de fixation (41) disposé sur la table de travail (40), et dans lequel le véhicule de transport (2) dispose d'une section d'appui (27) sur laquelle la table de travail (40) peut être installée avec l'élément de fixation (41) dans un alignement horizontal pour adopter une position de travail stationnaire.

2. Dispositif de transport (1) selon la revendication 1, **caractérisé en ce que** la table de travail (40) peut être fixée sur le véhicule de transport (2) par l'interface de fixation de table de travail (24) dans la zone arrière (7).

3. Dispositif de transport (1) selon l'une quelconque des revendications précédentes, **caractérisé en ce que** la table de travail (40) est disposée dans la position de transport dans la direction arrière (y) derrière la section de bâti verticale (14).

4. Dispositif de transport (1) selon l'une quelconque des revendications précédentes, **caractérisé en ce que** la section inférieure (3) présente une face supérieure inclinée (25) dans la zone du premier système de fixation (20).

5. Dispositif de transport (1) selon l'une quelconque des revendications précédentes, **caractérisé en ce que** le premier système de fixation (20) est configuré de telle manière que la table de travail (40) peut être installée avec l'élément de fixation (41) sur le premier système de fixation (20) dans un alignement basculé par rapport à la section de bâti verticale (14) et peut être bloquée sur le premier système de fixation (20) par pivotement de la table de travail (40) vers la section de bâti verticale (14).

6. Dispositif de transport (1) selon l'une quelconque des revendications précédentes, **caractérisé en ce que** l'interface de fixation de table de travail (24) dispose d'un deuxième système de fixation (21) qui est disposé sur la section de bâti verticale (14).

7. Dispositif de transport (1) selon la revendication 6, **caractérisé en ce que** le deuxième système de fixation (21) comprend une sangle (23), avec laquelle la table de travail (40) peut être bloquée dans la position de transport sur la section de bâti verticale (14).

8. Dispositif de transport (1) selon l'une quelconque des revendications précédentes, **caractérisé en ce que** le dispositif de transport (1) dispose d'un mécanisme de positionnement (26), avec lequel la poignée (12) peut être amenée dans au moins deux positions différentes.

9. Dispositif de transport selon la revendication 8, **caractérisé en ce que** la poignée (12) peut être amenée dans une première position, dans laquelle elle limite, dans un état, dans lequel la table de travail (40) se trouve dans la position de transport, l'angle de basculement maximal de la table de travail (40) de telle sorte qu'un angle de basculement, qui doit être adopté par la table de travail (40) pour desserrer la fixation de la table de travail (40) sur l'interface de fixation de la table de travail (24), ne peut pas être adopté.

10. Dispositif de transport (1) selon la revendication précédente, **caractérisé en ce que** la table de travail (40) dispose d'au moins un élément de blocage (45), avec lequel l'ensemble de pieds de table (46) peut être bloqué dans une position de travail déployée.

11. Dispositif de transport (1) selon l'une quelconque des revendications précédentes, comprenant la pile (90), qui est disposée sur la surface de pose (5) et qui est fixée sur la section inférieure (3) avec l'interface de fixation de contenant (6).

12. Dispositif de transport (1) selon l'une quelconque des revendications précédentes, dans lequel la table de travail (40) est retirée de l'interface de fixation de table de travail (24) dans la position de travail stationnaire.
